Europäisches Patentamt

European Patent Office

Office européen des brevets

(19)

(11) Publication number: **0 143 558**
A2

(12) # EUROPEAN PATENT APPLICATION

(21) Application number: **84307453.5**

(22) Date of filing: **29.10.84**

(51) Int. Cl.⁴: **B 62 D 7/00,** B 60 G 7/00

(30) Priority: **02.11.83 GB 8329219**

(43) Date of publication of application: **05.06.85 Bulletin 85/23**

(84) Designated Contracting States: **BE DE FR GB IT NL SE**

(71) Applicant: **BL TECHNOLOGY LIMITED, 106 Oxford Road, Uxbridge Middlesex UB8 1EH (GB)**

(72) Inventor: **King, Charles Spencer, Old Manor House Cubbington, Nr. Leamington Spa Warwickshire (GB)**
Inventor: **Vaughan, John Malcolm, 252 Highfield Road, Hall Green Birmingham (GB)**

(74) Representative: **Waters, Jeffrey, ARG Patent Department Cowley Body Plant, Cowley Oxford OX4 5NL (GB)**

(54) **Steering and suspension system.**

(57) A front sub-frame structure for a road vehicle comprises a longitudinal beam 11 joined to the vehicle steering rack 12 which forms part of the sub-frame. Sub-frame to body compliant mountings are a front mounting 14 and two spaced mountings 21 on brackets 19 of the rack. An engine mounting 29 is substantially equi-distant from the body mountings and is suitable for supporting the whole of the weight of a three cylinder engine. There is limited compliance in the joint between beam 11 and rack 12. Brackets 19 on the rack also carry suspension mountings 22.

STEERING AND SUSPENSION SYSTEM

The invention relates to a steering and suspension system for a vehicle.

It is common practice to provide a sub-frame as part of a vehicle structure, to mount the sub-frame resiliently to a vehicle body and to at least partially mount suspension components for the front suspension and the vehicle engine unit to the sub-frame. One purpose of providing a sub-frame of this nature is to tend to isolate noise and vibration in the engine and suspension from the vehicle body and from occupants of the vehicle. A sub-frame tends to have the disadvantages of adding to the cost, complexity and weight of the vehicle.

According to the present invention there is provided a steering and suspension system for the front wheels of a vehicle comprising a steering rack assembly compliantly mounted to a vehicle body and laterally extending front wheel suspension members mounted to the steering rack. The rack assembly effectively acts as a suspension sub-frame and because laterally extending suspension members as well as the steering linkage both extend from the rack assembly to the wheel mountings from one and the same unit, movement at the compliant mounting has little or no effect on the steering of the vehicle.

Preferably the outer end portions of the steering rack assembly carry bracket portions incorporating mountings for the laterally extending front wheel suspension members. These bracket portions may carry compliant mountings by which the rack assembly is mounted to the vehicle. The rack assembly may incorporate a cast light alloy housing.

The compliant rack mountings may include a longitudinally extending beam secured to the rack assembly and compliantly mounted to the body. Such a beam controls angular movement of the rack about an axis transverse to the vehicle whilst allowing fore and aft compliant movement.

The longitudinally extending beam may incorporate an engine mounting by which a major part of the engine weight is supported. The engine may be a three-cylinder receiprocatory internal combustion engine mounted such that substantially the whole of the weight of the engine is supported on the beam. An effective way of mounting a three-cylinder engine is to support its weight from one central engine mounting and to provide other engine mountings purely for locating the engine against angular movement about its main mounting. Such a mounting can be provided readily by what is in effect a sub-frame constituted by the steering rack and the longitudinally extending arm mounted to the steering rack. The engine load can be taken directly on this arm.

An embodiment of the invention will be described by way of example with reference to the accompanying drawings in which:-

Figure 1 is a plan view of a sub-frame according to the invention;

Figure 2 is a front view of the sub-frame shown in Figure 1;

Figure 3 is a section on line III-III of Figure 1 on a larger scale showing a detail;

Figure 4 is a section on line IV-IV of Figure 1 on an enlarged scale showing a further detail;

Figure 5 is a section on line V-V of Figure 2 on an enlarged scale showing a still further detail; and

Figure 6 is a section on line VI-VI of Figure 2 on an enlarged scale showing a still further detail.

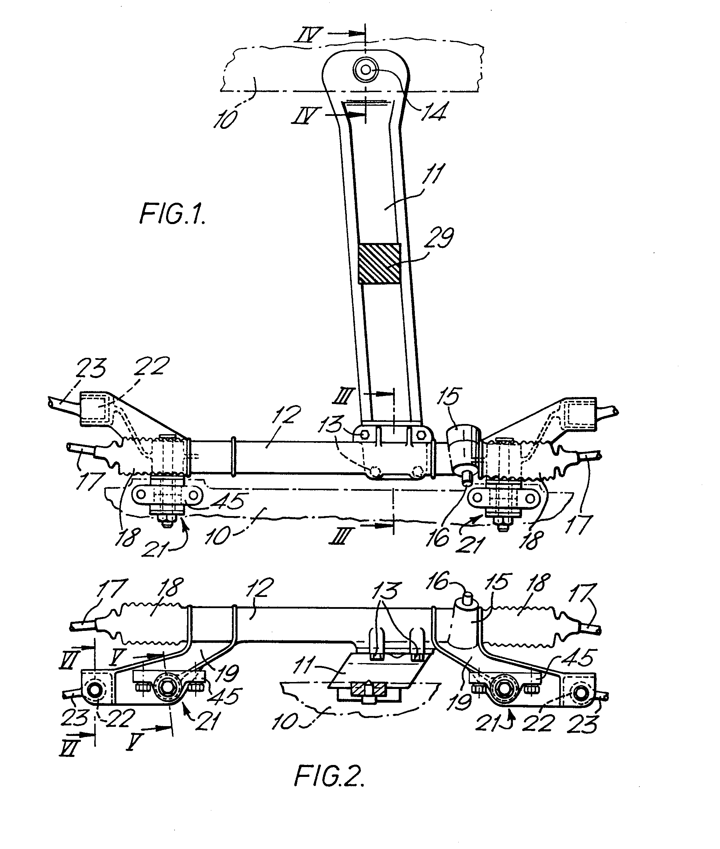

Referring first to Figures 1 and 2, a sub-frame is constituted primarily by a longitudinally extending beam 11 and a transversely extending steering rack assembly 12. The beam 11 is formed as a top-hat section steel pressing whereas the body of the rack assembly 12 is constituted by an aluminium casting. The rear end of the beam is mounted substantially rigidly to the rack assembly by means of four bolts 13. A compliant mounting 14 supports the forward end of the beam 11 on a forward cross-member of the vehicle body 10.

The rack assembly incorporates the ususal pinion gear housing 15 with steering column input connection 16. The rack assembly of course also includes the usual transversely movable rack member (not shown) which is connected to the two steering rods 17 by ball joints enclosed within flexible rubber boots 18 which seal the ends of the rack. Near its two outer ends, the rack housing has two integral bracket portions 19 which each carry a compliant body mounting 21 for the rack and a suspension arm mounting 22 for a suspension arm 23. Arm 23 is a laterally extending front suspension member.

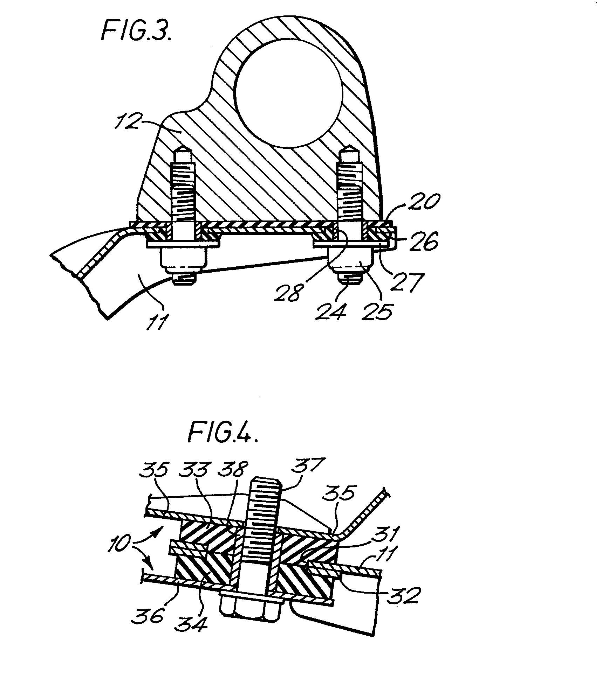

Figure 3 shows details of the mounting by which the beam 11 and rack 12 are secured together. The rack and beam both have large area flat surfaces which bear against each other through the intermediary of a thin flat rubber gasket 20. Four studs 24 and nuts 25 (replacing the bolts shown in diagrammatically in Figure 1) secure the rack and beam together, direct mechanical interconnection being prevented by thin rubber grommets 26 held captive under steel washers 27 and compressed to an extent limited by sleeves 28. This mounting arrangement has sufficient compliance to restrict transmission of sound and vibration between the beam and the rack but is sufficiently rigid to preserve the structural integrity of the connection between beam and rack and thus retain the beam and rack effectively as a sub-frame.

The beam 11 carries a flexible engine mounting 29 by means of which substantailly the whole of the weight of a three cylinder reciprocatory internal combustion engine (not shownn) can be supported on the sub-frame. The remainder of the mounting of the engine to the vehicle is by way of stabalising tie rods connected directly between engine and body. Instead of just an engine, the unit mounted on the mounting 29 may be a complete assembly of transverse engine, clutch and gearbox and possibly also differential. The engine mounting 29 is substantially equidistant from the three sub-frame to body mountings 14, 21 and 21.

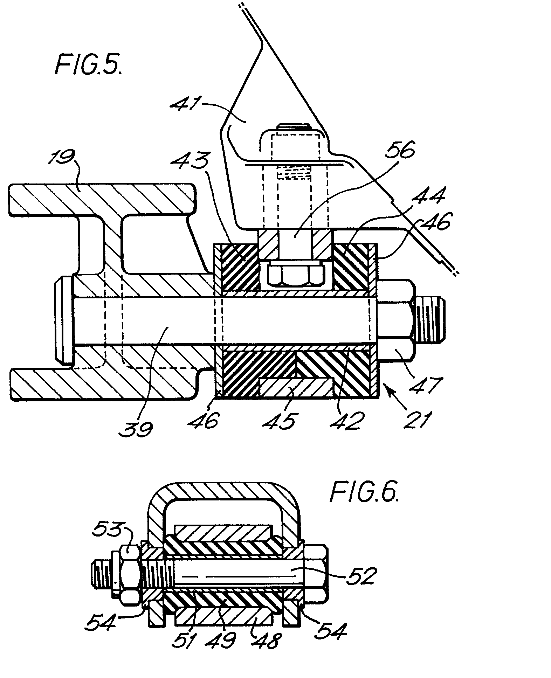

Figure 4 shows details of the beam to body mounting 14. The beam 11 incorporates a mounting aperture 31 reinforced by a large washer 32 welded to the beam. Two rubber bushes 33 and 34 are carried one to each side of the beam 11 and extend into the aperture 31. The body incorporates a main body panel 35 and a mounting bracket 36 spaced from but secured to the panel 35 but independent of the mounting 14 by means not shown. The rubber bushes 33 and 34 together with the end of the beam 11 are sandwiched between panel 35 and bracket 36 and secured in position by a central mounting bolt 37 which clamps the joint to an extent controlled by a sleeve 38 surrounding the bolt and secured within a central aperture of the rubber bushes 33 and 34. This compliant mounting allows limited universal displacement and angular deflections of the beam with respect to the body 10.

Figure 5 shows further details of one of the compliant mountings 21 by which the rack is mounted to the body. A central mounting bolt 39 is secured to the bracket portion 19. The bolt 39 passes through an aperture in the mounting 21 which comprises two rubber bushes 43 and 44 mounted on a steel sleeve 42 between two end washers 46 and a steel bracket 45 held between the bushes 43 and 44. The bracket 45 is secured to a body panel 41 by two bolts 56. The mounting 21 is secured to the bold 39 and hence to the bracket portion 19 of the rack housing by means of a nut 47 on the end of the bolt 39. The rubber bushes 43 and 44 are held under compression between the washers 46 by the nut 47 and the sleeve 42 controls the extent to which the rubber bushes can be compressed. The mounting 21 is preferably secured to the bolt 39 before the rack housing is attached to the body panel 41. This joint provides for limited universal compliant displacement between the body and the rack and also allows relative angular movement.

The three well-spaced mounting points for the sub-frame provide accurate and accurately controlled mounting for the sub-frame on the body and, as will be appreciated from Figure 1, the sub-frame can be simply lowered into position and bolted to the three mounting points. The sub-frame is constrained against excessive movement in any direction. As previously explained, the mounting between the rack and the beam is sufficiently rigid to maintain the sub-frame as a structural unit and thus the beam 11 acts as a cantilever to prevent undue movement of the rack about a transverse axis through the two mountings 21.

Figure 6 shows details of the mountings of the suspension arms 23 to the rack bracket portions 19. Each suspension arm incorporates an integral end eye 48 which is mounted by means of a rubber bush 49, a steel sleeve 51, mounting bolt 52, nut 53 and end caps 54 to the bracket portion 19. Because of the compliant mounting of the sub-frame to the body, it is not necessary to provide a high degree of compliance in the mounting 22 and for this reason rubber bush 49 is only of sufficient wall thickness to allow limited fore and aft deflections, the main suspension movement in a vertical direction being constituted by torsional movement within the bush 49. As previously explained, the sub-frame is well located as well as being well insulated from the body with the result that suspension arms 23 contribute to accurate control of the suspension without transmitting excessive suspension vibrations to the body.

In a similar way, steering rods 17 provide accurate steering without feeding back excessive vibrations to the body.

The suspension layout as a whole may take any conventional form. For example, vertical suspension loads and brake torque may be taken by a Macpherson-type strut and a lever arm of an anti-roll bar may be provided for fore and aft location.

One feature which is particularly helpful in retaining accurate wheel alignment during deflection of the sub-frame is that both the main transverse locating arms 23 of the suspension and the steering arms 17 move together with lateral movements of the sub-frame so that these movements have little effect on the steer angle of the wheels.

By using the steering rack as a major part of the sub-frame, the additional structure necessary to provide the sub-frame is reduced. This saving more than compensates for any additional strength which has to be built into the steering rack.

0143558

CLAIMS

1    A steering and suspension system for the front wheels of a vehicle comprising a steering rack assembly compliantly mounted to a vehicle body and laterally extending front wheel suspension members mounted to the steering rack.

2    A steering and suspension system as claimed in claim 1 wherein the outer end portions of the steering rack assembly carry bracket portions incorporating mountings for the laterally extending front wheel suspension members.

3    A steering and suspension system as claimed in claim 2 wherein the bracket portions carry compliant mountings by which the rack assembly is mounted to the vehicle.

4    A steering and suspension system as claimed in claim 1 or claim 2 or claim 3 wherein the rack assembly incorporates a cast light alloy housing.

5    A steering and suspension assembly as claimed in any one of the preceding claims wherein the compliant rack mountings include a longitudinally extending beam secured to the rack assembly and compliantly mounted to the body.

6    A steering and suspension system as claimed in claim 5 wherein the longitudinally extending beam incorporates an engine mounting by which a major part of the engine weight is supported.

7    A steering and suspension system as claimed in claim 6 in conjuction with a three-cylinder reciprocatory internal combustion engine mounted such that substantially the whole of the weight of the engine is supported on the beam.

8    A steering and suspension structure for a vehicle substantially as hereinbefore described with reference to the accompanying drawings.

1/3

FIG.1.

FIG.2.

FIG.3.

FIG.4.

FIG.5.

3/3

FIG.6.